Europäisches Patentamt

European Patent Office

Office européen des brevets

(11) Veröffentlichungsnummer: **0 190 103**
**A2**

# EUROPÄISCHE PATENTANMELDUNG

(21) Anmeldenummer: **86810043.9**

(22) Anmeldetag: **24.01.86**

(51) Int. Cl.⁴: **B 29 C 67/22**
**B 29 C 33/12**
**//B29L23:22, B29K105:04**

(30) Priorität: **28.01.85 CH 364/85**

(43) Veröffentlichungstag der Anmeldung:
**06.08.86 Patentblatt 86/32**

(84) Benannte Vertragsstaaten:
**AT BE DE FR GB IT LU NL SE**

(71) Anmelder: **Auf der Maur, Adolf**
**Asetstrasse 36**
**CH-6438 Ibach(CH)**

(72) Erfinder: **Auf der Maur, Adolf**
**Asetstrasse 36**
**CH-6438 Ibach(CH)**

(54) **Isolierrohrbogen zur Herstellung von Fernheizanlagen.**

(57) Bei einem Isolationsstahlrohrbogen wird der Hart-Polyethylenaussenmantel in Flansch unten (7) und gleichzeitig in Bogenstütze (5) hineingeschoben. Der Stahlrohrbogen (1) wird ohne Distanzhalter in Polyethylenbogen (2) in Flansch (7) und Zentriebüchse geschoben. Flansch (3) oben wird auf Polyethylenbogen (2) gepresst, und do durch Bogenstütze (5) keine Fliehkraft entstehen kann. Zentrierbüchse (4) und (8) unten hat die Aufgabe dass der Stahlrohrbogen (1) genau im Zentrum ist. Wonach der Zwischenraum, durch die Einfüllöffnung (10) unter Hochdruck mit der Isoliermasse (Polurethan -Hartschaum ausgesschäumt wird.

EP 0 190 103 A2

./...

FIG. 1

Isolierrohrbogen zur Herstellung von Fernheizanlagen

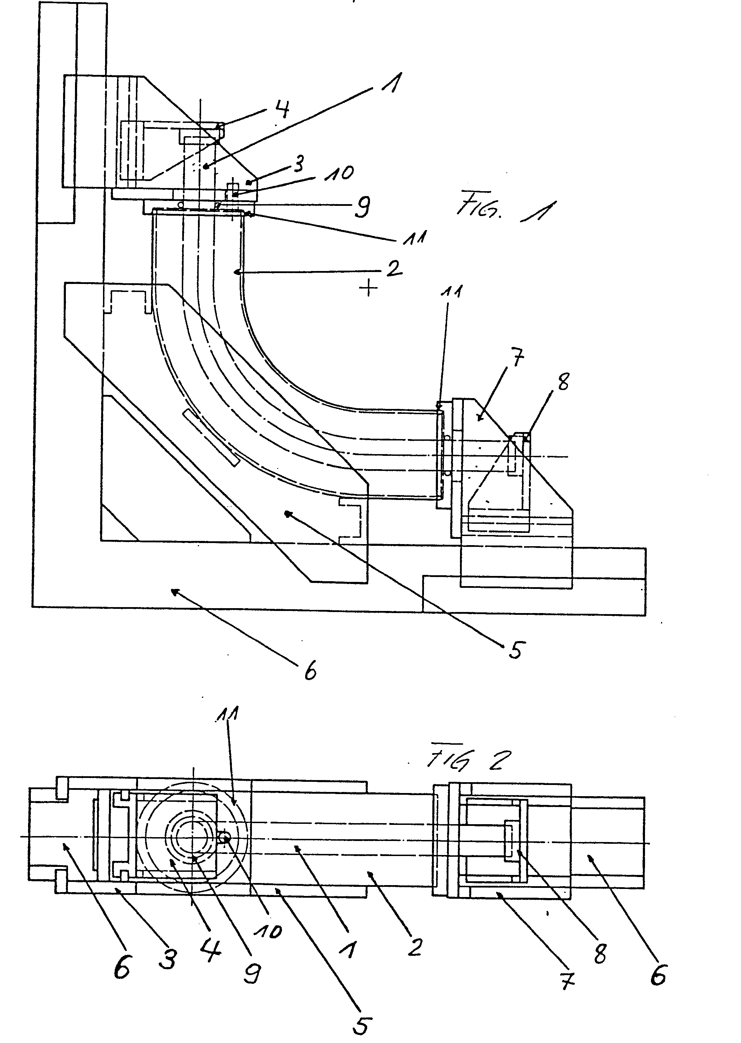

Die Erfindung betrifft ein Isolationsbogen und Herstellung des Isolationsbogens für Fernheizanlagen und Sanitäranlagen. Der Bogen kann aus jedem beliebigen Materialien hergestellt werden. Zum Beispiel aus Stahl und Hartpolyathylen, Kupferrohr und Hartpolyathylen u. s. w. Voraussetzung ist, dass der Stahlrohrbogen (1) die gleiche Biegung aufweist wie der Hartpolyathylenbogen (2) und dass sie genau in die Bogenleere Fig. 1 passen. Und dann mit Hartpolyurethanschaum ausgeschäumt wird. Die Bogen können in allen beliebigen Dimensionen hergestellt werden. Es müssen dann allerdings Flansch unten (7) Zentrierbüchse (8) Bogenstütze (5) Flansch oben (3) und Zentrierbüchse (4) auf die verschiedenen Dimensionen angepasst werden. Die Biegungen können von $15^{\circ}$ - $90^{\circ}$ hergestellt werden. Voraussetzung ist, dass Montagegestell (6) und Bogenstütze (5) dementsprechend hergestellt wird und Flansch unten (7) und Flansch oben (3) in jedes Montagegestell (6) passen.

Der Erfindung liegt die Aufgabe zugrunde dass der Bogen der Eingangs beschriebenen Art so ausgestattet ist, dass die verwendete Anzeigevorrichtung gegenüber den bekannten Lösungen wesentlich einfacher ist. Die Erfindung ist in der Zeichnung in zwei Ausführungsbeispielen dargestellt und nachfolgend beschrieben. Es zeigt Fig. 1 die Seitenansicht der Stahlrohrbogenleere mit Isolationsrohrbogen.

Fig. 2 Die Obenansicht der Stahlrohrbogenleere mit Isolationsrohrbogen.

0190103

Patentansprüche

1. Verfahren zur Herstellung eines Rohrbogens mit Isoliertem Aussenmantel insbesondere für Fernheizanlagen. Dadurch gekennzeichnet dass der Stahlrohrbogen die gleiche Biegung wie der Isolieraussenmantel hat. Die Montage leere Fig. 1 hat die Aufgabe, dass der Aussenmantel aus Hart-Polyethylen in Flasch unten (7) und gleichzeitig in Bogenstütze (5) hineingeschoben wird und der Stahlrohrbogen (1) ohne distanzhalter in den Polyethylenbogen (2) in Flansch (7) und Zentrierbüchse (8) geschoben wird. Und Flansch (3) oben auf Polyethylenbogen (2) gepresst und so durch Bogenstütze (5) keine Fliehkraft entstehen kann. Zentrierbüchse (4) oben hat die Aufgabe, dass der Stahlrohrbogen (1) genau im Zentrum ist. konische Einbuchtung (11) hat die Aufgabe, dass der Hartpolyethylenbogen oben und unten genau ins Zentrum gepresst wird. Dadurch kann kein Materialverlust entstehen. Wonach der Zwischenraum durch die Einfüllöffnung (10) unter Hochdruck mit der Isoliermasse (Polyurethan-Hartschaum) ausgeschäumt wird.

2. Isolierter Rohrbogen, hergestellt nach dem Verfahren P.a. 1 dadurch gekennzeichnet, dass der Isolieraussenmantel keine Schweissnaht aufweist und die Isoliermasse ohne Distanzhalter und der Isolieraussenmantel statisch hoch beanspruchbar ist.

0190103

FIG. 1

FIG 2